(19) Europäisches Patentamt
European Patent Office
Office européen des brevets

(11) **EP 3 395 485 A1**

(12) **EUROPEAN PATENT APPLICATION**

(43) Date of publication:
**31.10.2018 Bulletin 2018/44**

(51) Int Cl.:
***B23B 51/00*** (2006.01)     ***B23B 51/02*** (2006.01)

(21) Application number: **18168111.5**

(22) Date of filing: **19.04.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.04.2017 GB 201706686**

(71) Applicant: **Rolls-Royce plc**
**London SW1E 6AT (GB)**

(72) Inventors:
• **Novovic, Donka**
**Derby, Derbyshire DE24 8BJ (GB)**
• **Butler-Smith, Paul**
**Derby, Derbyshire DE24 8BJ (GB)**
• **Gavaldà Diaz, Oriol**
**Derby, Derbyshire DE24 8BJ (GB)**
• **Axinte, Dragos**
**Derby, Derbyshire DE24 8BJ (GB)**

(74) Representative: **Rolls-Royce plc**
**Intellectual Property Dept SinA-48**
**PO Box 31**
**Derby DE24 8BJ (GB)**

(54) **A CUTTING TOOL**

(57)     A fluted drill (100) comprises, in axial sequence, a body portion (110), and a cutting portion (130). The cutting portion (130) comprises two or more cutting edges (140), with each cutting edge (140) extending from a distal end (132) of the cutting portion (130), along the cutting portion (130) towards the body portion (110), to the body portion (110).

Each cutting edge (140) has a first rake angle ($\gamma_1$) at the distal end (132) of the cutting portion (130), progressively increasing to a third rake angle ($\gamma_3$) at a proximal end (134) of the cutting portion (130). Each cutting edge (140) has a first uncut chip thickness ($h_{D,1}$) at the distal end (132) of the cutting portion (130), progressively decreasing to a third uncut chip thickness ($h_{D,3}$) at the proximal end (134) of the cutting portion (130).

$\gamma$ - rake angle
$h_D$ - uncut chip thickness (depth of cut)
$r$ - radius of the tool

FIG. 5

EP 3 395 485 A1

**Description**

*Field of the Disclosure*

The present disclosure relates to a cutting tool and particularly, but not exclusively, to a cutting tool for use with ceramic matrix composite materials.

*Background to the Disclosure*

Ceramic Matrix Composite (CMC) materials are a class of composite materials in which a ceramic matrix material is reinforced with directional ceramic fibres. CMC materials have excellent high temperature properties and are often considered as a substitute for metal alloys, such as nickel-based superalloys, in high temperature applications.
CMC materials often require machining processes such as drilling or milling in order to achieve the final shape of the workpiece. Due to the heterogeneous and anisotropic nature of CMC materials together with their high hardness, such machining operations, when carried out with conventional tooling, are time-consuming and result in high tool wear rates, which can adversely affect quality of the machined component.

*Statements of Disclosure*

According to a first aspect of the present disclosure there is provided a fluted drill comprising, in axial sequence, a body portion, and a cutting portion, the cutting portion comprising two or more cutting edges, each cutting edge extending from a distal end of the cutting portion, and along the cutting portion towards the body portion,
wherein each cutting edge has a first rake angle at the distal end of the cutting portion, progressively increasing to a third rake angle at a proximal end of the cutting portion, and each cutting edge has a first uncut chip thickness at the distal end of the cutting portion, progressively decreasing to a third uncut chip thickness at the proximal end of the cutting portion.
For a conventional drill, the rake angle is either uncontrolled along the cutting edge or has a constant value along the cutting edge. When cutting heterogenic and anisotropic materials (which belong to the group of materials that are colloquially termed 'difficult-to-cut'), a rake angle that increases along the cutting edge may increase the tool life and may improve the surface quality of the machined surface.
The nature of CMC materials imposes different requirements on the cutting processes. During the process of cutting the composite fibres, positive rake angles (i.e. sharp edges) are needed in order to achieve a high surface quality. Additionally, the high hardness of the CMC material's ceramic matrix requires negative rake angles to achieve a longer tool life.
Consequently, a controlled progressive variation of the rake angle of the cutting edge that has a negative value in the radially inner part of the cutting edge and increases to a positive value at the radially inner part will satisfy both requirements.
Conventional drills do not disclose a progressive variation of the uncut chip thickness during the variation of the rake angle. The term 'uncut chip thickness' is sometime colloquially referred to as 'depth of cut'.
The specific requirements of cutting CMC materials also require a controlled progressive variation of the uncut chip thickness. This is because CMC materials experience a brittle-to-ductile transition depending on the uncut chip thickness used.
In order to achieve a high surface quality, the uncut chip thickness at the end of the cutting process should be as small as possible in order to cut the material in a ductile domain (to improve the surface integrity and to reduce the surface roughness).
In order to increase the efficiency of the cutting process, cutting with negative rake angles will enable a higher uncut chip thickness to be used. However, when using positive rake angles, a smaller uncut chip thickness will be needed to achieve a more "ductile" behaviour and provide a longer tool life. The smaller uncut chip thickness means that the cutting tool will have a longer tool life than cutting tools of the prior art.
These requirements can be met by a controlled progressive variation in the uncut chip thickness that progressively increases along the length of the cutting edge.
The flutes provide a space path for the removal of CMC chips that have removed from the parent material by the drill during the cutting process.
Optionally, the cutting portion comprises two cutting edges
The use of two cutting edges simplifies the tool geometry while still fulfilling the requirements for cutting CMC materials as outlined above.
Optionally, each flute is a straight flute.
The use of a straight flute geometry, when compared to a twisted flute geometry, can simplify the manufacturing process of the drill, which in turn makes the straight flute drill cheaper.

In an alternative embodiment each flute may be a twisted flute.

Optionally, the two or more flutes are circumferentially spaced evenly around the body portion.

By spacing the flutes uniformly around the axis of rotation, the cutting forces can be equalised and material chip generation becomes more evenly distributed.

Optionally, the cutting portion comprises a straight cutting edge extending from the proximal end of the cutting portion.

This means that the straight cutting portion of the twist drill tapers from the point at which it meets the cutting portion in the direction of the body portion. This ensures that the twist drill does not bind or stick in a hole as the twist drill cuts into the parent material.

Optionally, the body portion has a radius R, the cutting portion comprises a shoulder point between the distal end and the proximal end thereof, the shoulder point being positioned at a predetermined radius , each cutting edge has a second rake angle at the shoulder point, and each cutting edge has a second uncut chip thickness at the shoulder point.

The shoulder point provides a point of reference along the cutting edge for the definition of the rake angle and uncut chip thickness of the cutting portion, to better define the profile and parameters of the cutting portion along its length.

This arrangement of cutting edge geometry provides for improved cutting conditions assuring a superior surface quality because of the finishing cutting achieved with positive rake angles between the second and third rake angles in combination with the small chip thickness between the second and third chip thickness values. This is critical for achieving the quality of machined CMC components (free from fibre damage, fibre pull-out, cracking and other machining induced defects).

Additionally, due to this transition on the cutting conditions (rake angle and chip thickness), a longer tool life is envisioned for the drill bit, achieving a lower cost per hole, thus enabling cost efficient machining of CMC components.

Optionally, the shoulder point is positioned at a radius of approximately 0.6*R.

In a further embodiment, the shoulder point may be positioned at a radius of between approximately 0.5*R and approximately 0.7*R. In a still further embodiment, the shoulder point may be positioned at a radius of between approximately 0.3*R and approximately 0.9*R.

Optionally, the first rake angle is -10°, the second rake angle is 10°, the third rake angle is 30°, the first uncut chip thickness is 4 $\mu$m, the second uncut chip thickness is 1 $\mu$m, and the third uncut chip thickness is 0.1 $\mu$m.

These specific rake angle and uncut chip thickness parameters are found to be effective in cutting CMC materials.

Optionally, the drill is formed from a material selected from the group consisting of monolithic polycrystalline diamond (PCD), and diamond coated HSS, carbide, ceramic, and cubic boron nitride.

The choice of material is dictated by the requirement for the cutting portion to have a negative rake angle and large uncut chip thickness at its tip or distal end, with these parameters progressively blending to a positive rake angle and a small uncut chip thickness at the proximal end of the cutting portion.

Optionally, the cutting portion comprises brazed or replaceable disposable carbide inserts.

The inserts may be formed from a single material or from a combination of different materials such as, for example, monolithic polycrystalline diamond (PCD), or diamond coated HSS, carbide, ceramic, and cubic boron nitride.

The substrate of the cutting portion, for all of the design and material options described herein above, may be either uncoated or may be protected with a thin layer of a hard, chemically inert, anti-friction and thermally-insulating coating. Such a coating provides increased resistance to chemical affinity, friction, and mechanical and thermal loads, which in turn increases the wear resistance of the drill.

The cutting portion may be formed separately from the straight cutting portion and the body portion of the drill. Alternatively, it may be formed integrally therewith.

According to a second aspect of the disclosure, there is provided a method of manufacturing a fluted drill, the method comprising the steps of:

(i) providing a drill blank;

(ii) forming at least two flutes along at least part of a radially outer surface of the drill blank, the at least two flutes extending from a distal end of the drill blank to at least part-way along the drill blank; and

(iii) forming a cutting portion at the distal end of the drill blank, the distal end of the drill blank corresponding to a distal end of the cutting portion, the cutting portion having two or more cutting edges, each cutting edge corresponding to a respective one of the flutes, each cutting edge extending from the distal end of the drill blank, and along the cutting portion, each cutting edge having a first rake angle at the distal end of the cutting portion, progressively increasing to a third rake angle at a proximal end of the cutting portion, and each cutting edge has a first uncut chip thickness at the distal end of the cutting portion, progressively decreasing to a third uncut chip thickness at the proximal end of the cutting portion.

For a conventional drill, the rake angle is either uncontrolled along the cutting edge or has a constant value along the cutting edge. When cutting heterogenic, anisotropic and hard materials (colloquially termed 'difficult-to-cut' materials), a rake angle that increases along the cutting edge may increase the tool life and may improve the surface quality of the machined surface.

The nature of CMC materials imposes different requirements on the cutting processes. During the process of cutting the composite fibres, positive rake angles (i.e. sharp edges) are needed in order to achieve a high surface quality. Additionally, the high hardness of the CMC material's ceramic matrix requires negative rake angles to achieve a longer tool life.

Consequently, a controlled progressive variation of the rake angle of the cutting edge that has a negative value in the radially inner part of the cutting edge and increases to a positive value at the radially inner part will satisfy both requirements.

Conventional drills do not disclose a progressive variation of the uncut chip thickness during the variation of the rake angle. The specific requirements of cutting CMC materials also require a controlled progressive variation of the uncut chip thickness. This is because CMC materials experience a brittle-to-ductile transition depending on the uncut chip thickness used.

In order to achieve a high surface quality, the uncut chip thickness at the end of the cutting process should be as small as possible in order to cut the material in a ductile domain (to improve the surface integrity and to reduce the surface roughness).

In order to increase the efficiency of the cutting process, cutting with negative rake angles will enable a higher uncut chip thickness can be used. However, when using positive rake angles, a smaller uncut chip thickness will be needed to achieve a more "ductile" behaviour and provide a longer tool life.

These requirements can be met by a controlled progressive variation in the uncut chip thickness that progressively increases along the length of the cutting edge.

The flutes provide a space path for the removal of CMC chips that have removed from the parent material by the drill during the cutting process.

Optionally, step (iii) of forming a cutting edge at the distal end of the drill blank, comprises the steps of:

(iii') locating a shoulder point, the shoulder portion being positioned at a predetermined radius, where R is the radius of the drill blank; and

(iii") forming a cutting portion at the distal end of the drill blank, the cutting portion having two or more cutting edges, each cutting edge corresponding to a respective one of the flutes, each cutting edge extending from the distal end of the drill blank, and along the cutting portion, each cutting edge having a first rake angle at a distal end of the cutting portion, progressively increasing to a second rake angle at the shoulder point, and further progressively increasing to the third rake angle at a proximal end of the cutting portion, and each cutting edge has a first uncut chip thickness at the distal end of the cutting portion, progressively decreasing to a second uncut chip thickness at the shoulder point, and further progressively decreasing to a third uncut chip thickness at the proximal end of the cutting portion.

The shoulder point provides a point of reference along the cutting edge for the definition of the rake angle and uncut chip thickness of the cutting portion, to better define the profile and parameters of the cutting portion along its length.

Optionally, the shoulder point is positioned at a radius of approximately 0.6*R.

In a further embodiment, the shoulder point may be positioned at a radius of between approximately 0.5*R and approximately 0.7*R. In a still further embodiment, the shoulder point may be positioned at a radius of between approximately 0.3*R and approximately 0.9*R.

Other aspects of the disclosure provide devices, methods and systems which include and/or implement some or all of the actions described herein. The illustrative aspects of the disclosure are designed to solve one or more of the problems herein described and/or one or more other problems not discussed.

### Brief Description of the Drawings

There now follows a description of an embodiment of the disclosure, by way of non-limiting example, with reference being made to the accompanying drawings in which:

Figure 1A shows a perspective view of a straight fluted drill according to a first embodiment of the disclosure;
Figure 1B shows a partial elevational view of the cutting end of the drill of Figure 1A;
Figure 1C shows an end view of the drill of Figure 1A;
Figure 2A shows the profile of the cutting edge of the drill of Figure 1 in the X-Y plane;
Figure 2B shows the profile of the cutting edge of the drill of Figure 1A in the X-Z plane;

Figure 3A shows a perspective view of a twisted flute drill according to a second embodiment of the disclosure;

Figure 3B shows a partial elevational view of the cutting end of the drill of Figure 3A;

Figure 3C shows an end view of the drill of Figure 3A;

Figure 4A shows the profile of the cutting edge of the drill of Figure 3A in the X-Y plane;

Figure 4B shows the profile of the cutting edge of the drill of Figure 3A in the X-Z plane;

Figure 5 shows a schematic view of the X-Z plane profile of the drill of Figure 3;

Figure 6 shows a flow chart detailing a method of designing the drill of Figure 1;

Figure 7A shows a sectional end view of a twist drill according to an embodiment of the present disclosure illustrating the nomenclature used in the flow chart of Figure 6;

Figure 7B shows a schematic partial elevational view of the end of the drill cutting portion of Figure 7A;

Figure 8 shows two examples of non-optimal and non-realistic solutions to the flow chart of Figure 6.

It is noted that the drawings may not be to scale. The drawings are intended to depict only typical aspects of the disclosure, and therefore should not be considered as limiting the scope of the disclosure. In the drawings, like numbering represents like elements between the drawings.

## Detailed Description

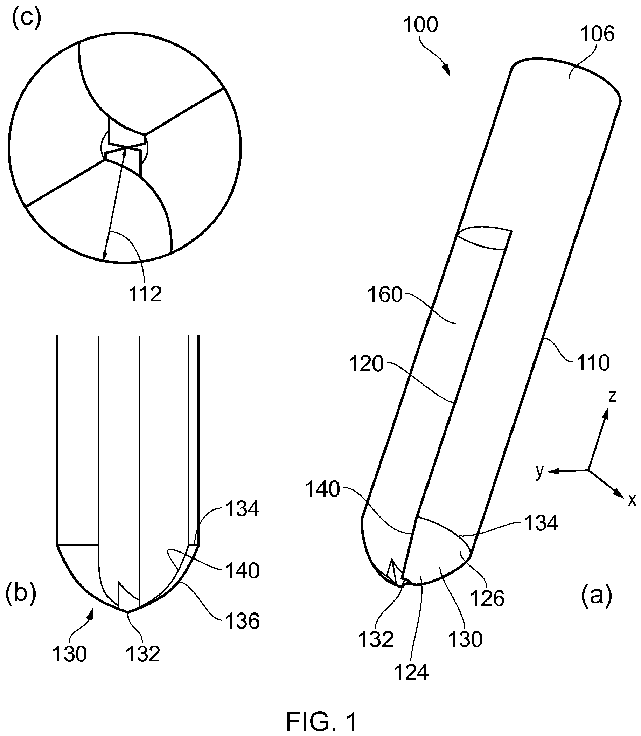

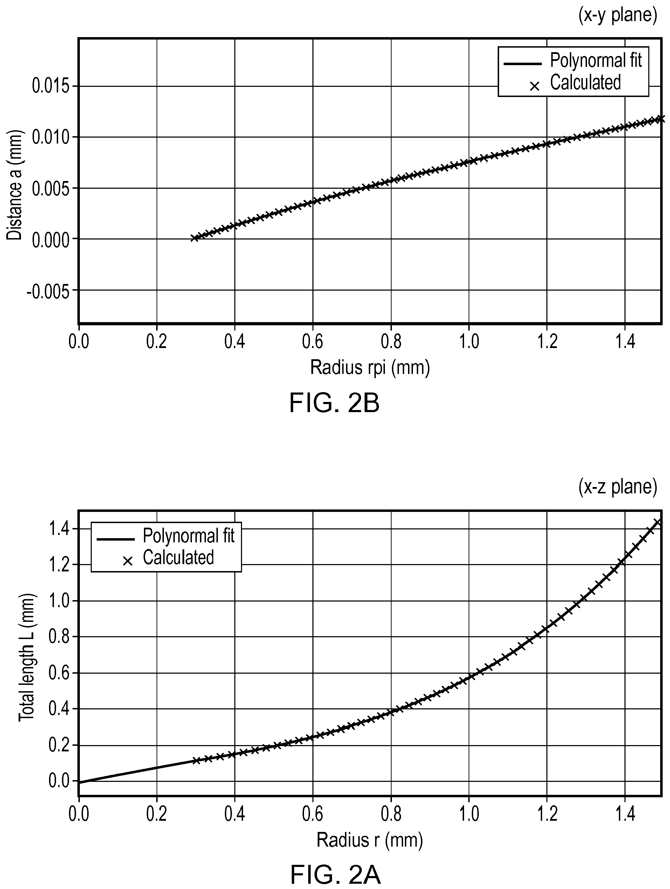

Referring to Figures 1A, 1B, 1C, 2A and 2B, a drill according to a first embodiment of the disclosure is designated generally by the reference numeral 100.

The drill 100 has, in axial sequence, a shank portion 106, a body portion 110 and a cutting portion 130, as shown in Figures 1A and 1B. In this embodiment, the shank portion 106 is used to locate and secure the drill 100 in a drill apparatus (not shown). In other arrangements, the drill 100 may comprise only a body portion 110 and a cutting portion 130.

The cutting portion 130 has a distal end 132, and a proximal end 134. The distal end 132 is at one end of the drill 100, and the proximal end 134 is part-way along the body portion 110. In other words, the cutting portion 130 extends from one end of the drill 100 to a point part-way along the body portion 110.

The body portion 110 has a radius R, shown in Figure 1C as 112.

In the present embodiment, the drill 100 is formed from a cemented carbide material with a polycrystalline diamond (PCD) coating. In alternative arrangements, the twist drill 100 may be formed entirely from PCD, or from an alternative carbide material, or a ceramic material, or from High Speed Steel, all with a diamond coating.

In the present embodiment, the drill 100 is formed as a monolithic component. In other words, the drill 100 is formed as a one-piece component. In alterative embodiments, the drill 100 may be formed with removable carbide inserts (not shown), with the cutting portion 130 being formed on the removable insert.

The cutting portion 130 comprises a shoulder point 136. The shoulder point 136 is positioned at a radius of 0.6*R.

The cutting portion 130 comprises two cutting edges 140. In other arrangements, the cutting portion 130 may comprise more than two cutting edges 140.

Each of the two cutting edges 140 extends along the body portion 110 as a flute 160.

Each of the two cutting portions 130 extends into a straight cutting edge 120 of the flute. Each straight flute edge 120 extends back from the cutting portion 130 along the body portion 110.

Each of the cutting edges 140 has a first rake angle 142 at the distal end 132 of the cutting portion 130, a second rake angle 144 at the shoulder point 136, and a third rake angle 146 at the proximal end 134 of the cutting portion 130. The first rake angle 142 increases progressively to the second rake angle 144, and progressively further to the third rake angle 146 along the cutting portion 130.

References herein to the rake angle mean the working rake angle in a normal plane.

A sample profile of the cutting edge 140 in the x-z plane (defined in Figure 1A) is shown in Figure 2A. Furthermore, Figure 2B shows the profile of the cutting edge 140 in the x-y plane (also defined in Figure 1A) for the same sample embodiment.

Each of the cutting edges 140 has a first uncut chip thickness 150 at the distal end 132 of the cutting portion 130, a second uncut chip thickness 152 at the shoulder point 136, and a third uncut chip thickness 154 at the proximal end 134 of the cutting portion 130. The first uncut chip thickness 150 decreases progressively to the second uncut chip thickness 152, and progressively decreases further to the third uncut chip thickness 154 along the cutting portion 130.

In the present embodiment, the first rake angle 142 is -10°, the second rake angle 144 is 10°, and the third rake angle 146 is 30°. In the present embodiment, the first uncut chip thickness 150 is 4 $\mu$m, the second uncut chip thickness 152 is 1 $\mu$m, and the third uncut chip thickness 154 is 0.1 $\mu$m.

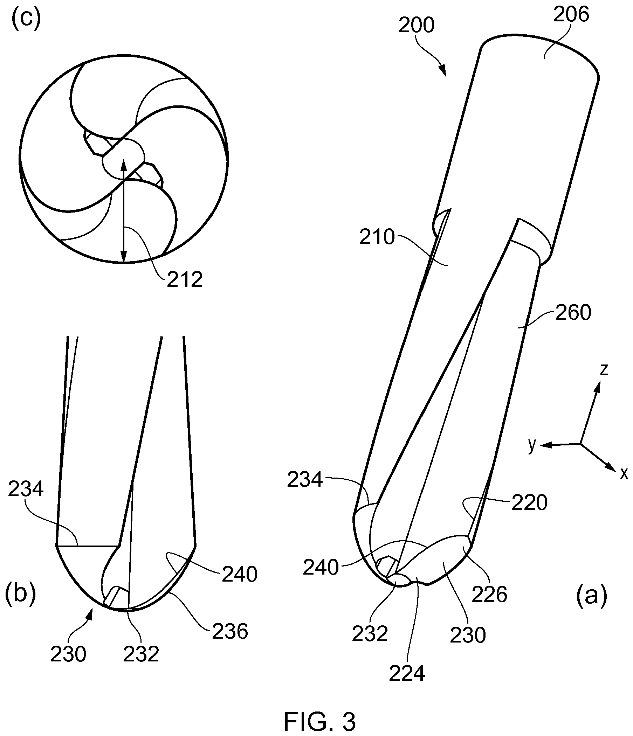

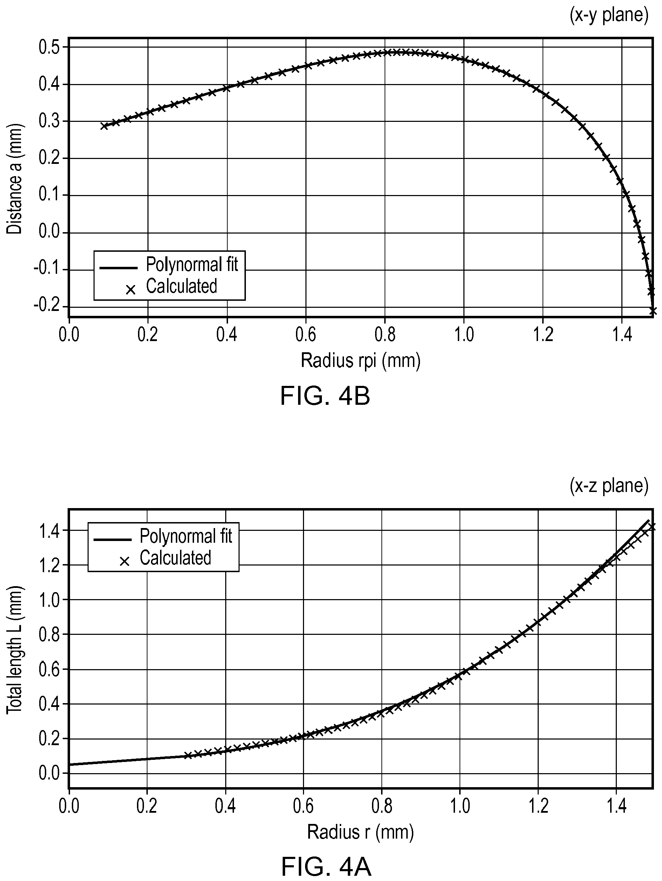

Referring to Figures 3A, 3B, 3C, 4A and 4B, a drill according to a second embodiment of the disclosure is designated generally by the reference numeral 200. Features of the drill 200 which correspond to those of the drill 100 have been given corresponding reference numerals for ease of reference.

The drill 200 has, in axial sequence, a shank portion 206, a body portion 210 and a cutting portion 230, as shown in Figures 3A and 3B. In this embodiment, the shank portion 206 is used to locate and secure the drill 200 in a drill apparatus (not shown). In other arrangements, the drill 200 may comprise only a body portion 210 and a cutting portion 230.

The cutting portion 230 has a distal end 232, and a proximal end 234. The distal end 232 is at one end of the drill 200, and the proximal end 234 is part-way along the body portion 210. In other words, the cutting portion 230 extends from one end of the drill 200 to a point part-way along the body portion 210.

The body portion 210 has a radius R, shown in Figure 3C as 212.

In the present embodiment, the drill 200 is formed as described above for the drill 100. The drill 200 may also comprise removable inserts as mentioned above in relation to the first embodiment.

The cutting portion 230 comprises a shoulder point 236. The shoulder point 236 is positioned at a radius of 0.6*R.

The cutting portion 230 comprises two cutting edges 240. In other arrangements, the cutting portion 230 may comprise more than two cutting edges 240.

Each of the two cutting edges 240 extends along the body portion 210 as a flute 260. In this embodiment, each flute 260 is a twisted flute. In other words, the flute edge 260 is twisted relative to the longitudinal axis of the drill by an angle termed the helix angle.

Each of the cutting edges 240 has a first rake angle 242 at the distal end 232 of the cutting portion 230, a second rake angle 244 at the shoulder point 236, and a third rake angle 246 at the proximal end 134 of the cutting portion 230. The first rake angle 242 increases progressively to the second rake angle 244, and progressively further to the third rake angle 246 along the cutting portion 230.

A sample profile of the cutting edge 240 in the x-z plane (defined in Figure 3A) is shown in Figure 4A. Furthermore, Figure 4B shows the profile of the cutting edge 240 in the x-y plane (also defined in Figure 3A) for the same sample embodiment.

Each of the cutting edges 240 has a first uncut chip thickness 250 at the distal end 232 of the cutting portion 230, a second uncut chip thickness 252 at the shoulder point 236, and a third uncut chip thickness 254 at the proximal end 234 of the cutting portion 230. The first uncut chip thickness 250 decreases progressively to the second uncut chip thickness 252, and progressively decreases further to the third uncut chip thickness 254 along the cutting portion 230.

In the present embodiment, the first rake angle 242 is -10°, the second rake angle 244 is 10°, the third rake angle 246 is 30°. In the present embodiment, the first uncut chip thickness 250 is 4 $\mu$m, the second uncut chip thickness 252 is 1 $\mu$m, and the third uncut chip thickness 254 is 0.1 $\mu$m.

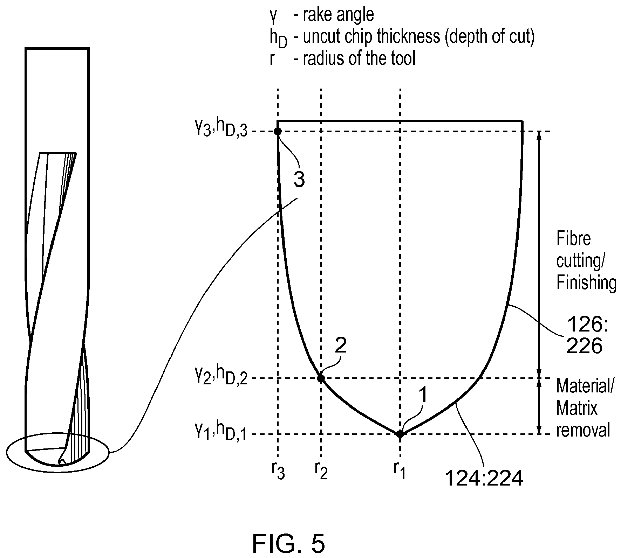

Figure 5 illustrates schematically that the cutting edge 120:220 of the present disclosure provides for two cutting zones; the first zone 124:224 extending from the distal end 132:232 to the shoulder point 136:236, and the second zone 126:226 extending from the shoulder point 136:236 to the proximal end 134:234.

In the first zone 124:224 the first rake angle 142:242 is negative and the first uncut chip thickness 150:250 is high. This combination is suited for the cutting and removal of the hard matrix material.

In contrast, in the second zone 126:226 the third rake angle 146:246 is positive and the third uncut chip thickness 154:254 is small. This combination is suited for the cutting of the ceramic fibres and the finishing of the cut to the matrix material surface.

The progressive transition between the drill parameters of the first and second zones 124,224:126,226 enables the drill of the present disclosure to effectively cut holes in ceramic matrix composite materials.

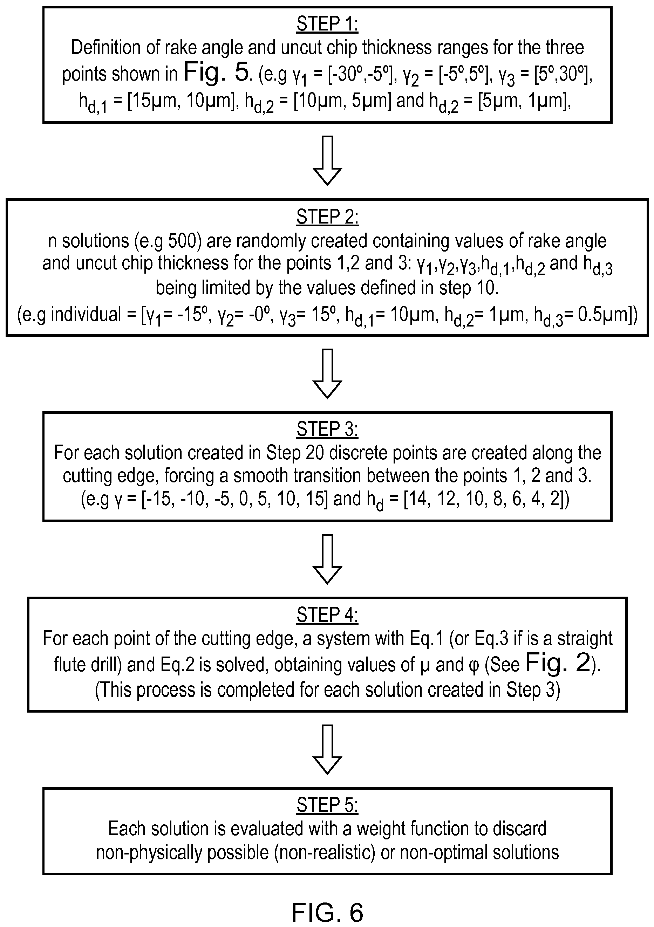

Figure 6 illustrates a flow chart for a method of designing a drill 100:200 according to an embodiment of the present disclosure.

The method starts at step 1 with the definition of numerical ranges for the parameters of rake angle and uncut chip thickness for each of the distal end 132:232 (shown as point 1 in Figure 5), the shoulder point 136:236 (shown as point 2 in Figure 5), and the proximal end 134:234 (shown as point 3 in Figure 5).

At step 2 a quantity of n sets of values for rake angle and uncut chip thickness are created within the constraints of the ranges set in step 1.

At step 3, for each one of the solutions created in step 2, a number of discrete values for each parameter (rake angle and uncut chip thickness) are generated so as to provide a smooth and progressive transition for the values of rake angle and uncut chip thickness between the points 1, 2 and 3.

At step 4, a set of standard equations is applied to each point along the cutting edge to determine a large number of solutions to these standard equations to provide sets of values for rake angle and uncut chip thickness within the limits set at step 1.

The standard equations used are shown below as Equation 1 and Equation 2. In the case where the drill 100:200 is a straight flute drill then Equation 3 replaces Equation 1.

Eq. 1: Rake angle in a normal plane for a drill for each point of the cutting edge (extracted from Astakhov[1]).

[1] Viktor P. Astakhov, Chapter 4: Twist and straight-flute drills. In Drills (Manufacturing Design and Technology CRC Press)

$$\gamma_{ne,i} = \gamma_{0,i} + \arctan\left(\left(\frac{r_i}{r_{dr}}\tan(w_d)\right)\left(\frac{1 - \sin^2\varphi_i \sin\mu_i}{\sin\varphi_i \cos\mu_i}\right) - \cos\varphi_i \tan\mu_i\right)$$

$$- \arctan(\frac{f_z}{2\pi r_i}\sin\varphi_i)$$

where: $\gamma_{ne,i}$ = working rake angle in the normal plane (in rad)

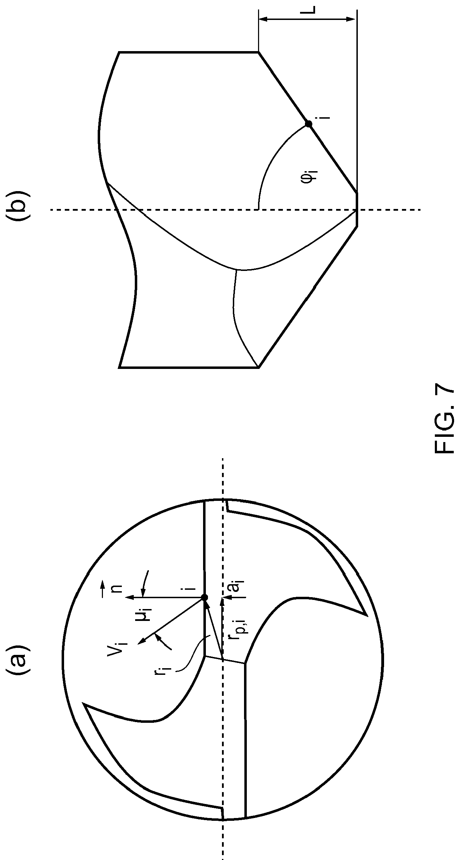

$r_i$ = distance from the centre of the drill for each 'i' point (in mm) (See Fig. 7a)

$r_{dr}$ = radius of the tool (in mm)

$w_d$ = twist angle of the drill (in rad)

$\phi_i$ = half-point angle for each 'i' point (in rad) (see Fig. 7b)

$\mu_i$ = angle between the vi and normal vector of the cutting edge (in rad) (see Fig.7a)

$f_z$ = feed rate (in mm/rev)_

<u>Eq. 2</u>: Uncut chip thickness for each point of the cutting edge (extracted from Astakhov[1]).

$$h_{d,i} = \frac{f_z}{2}\frac{1}{\sqrt{(1 + (\cot\varphi_i/\cos\mu_i)^2)}}$$

where: $h_{d,i}$ = uncut chip thickness

<u>Eq. 3</u>: Rake angle in a normal plane for a <u>straight flute</u> drill for each point of the cutting edge (extracted from Astakhov[2]).

[2] Viktor P. Astakhov, Chapter 4: Twist and straight-flute drills. In Drills (Manufacturing Design and Technology CRC Press)

$$\gamma_{ne,i} = \gamma_{0,i} - \arctan(\tan\mu_i \cos\varphi_i) - \arctan(\frac{f_z}{2\pi r_i}\sin\varphi_i)$$

Figures 7A and 7B illustrate the terminology used during the analysis step 4.

where:$\phi_i$ = half-point angle for each 'i' point (in rad) (see Fig. 7B);

L = length of the cutting region in the X-Z plane (see Fig 7B);

$v_i$ = Cutting speed direction for each 'i' point (see Fig. 7A);

$\mu_i$ = angle between the $v_i$ and normal vector of the cutting edge (in rad) (see Fig.7A);

$r_i$ = distance from the centre of the drill for each 'i' point (in mm) (See Fig. 7A);

$r_{p,i}$ = Cartesian horizontal distance from the centre of the drill for each 'i' point (see Fig. 7A);

$a_i$ = Cartesian vertical distance to the centre of the drill for each 'i' point; and

n = number of individuals created to find the best solution

Some of these sets of values for rake angle and uncut chip thickness will produce either arrangements that cannot physically be manufactured or may be sub-optimal. At step 5 each of the solution sets is weighted using a weighting function so as to enable the physically impossible and the sub-optimal sets of values to be discarded.

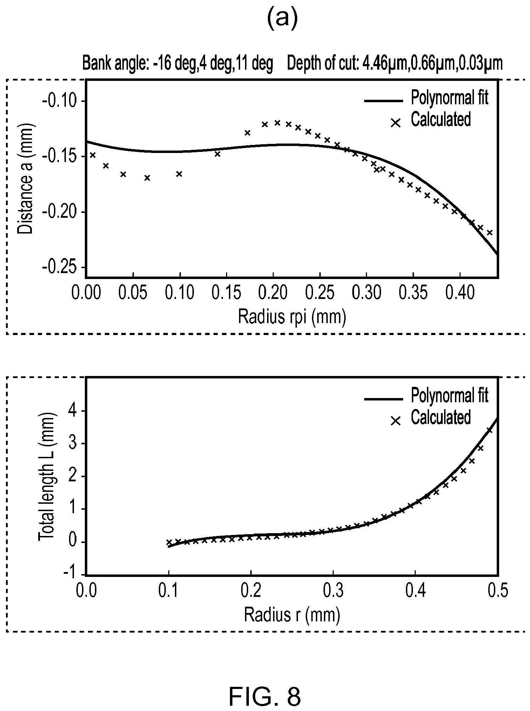

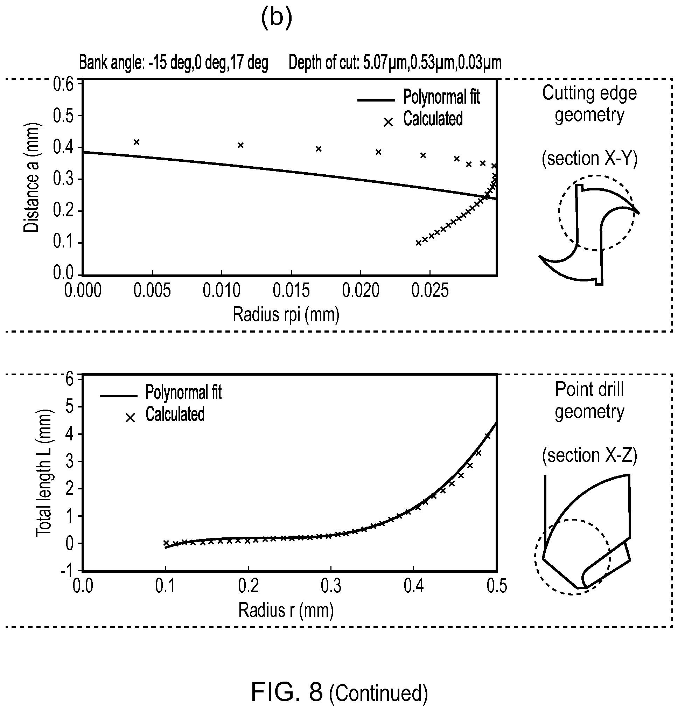

Figure 8 illustrates examples of such physically impossible and non-optimal solutions. Various example embodiments of the disclosure are described herein. Reference is made to these examples in a non-limiting sense. They are provided to illustrate more broadly applicable aspects of the disclosure. Various changes may be made to the disclosure described and equivalents may be substituted without departing from the scope of the invention. In addition, many modifications may be made to adapt a particular situation, material, composition of matter, process, process act(s) or step(s) to the objective(s) or scope of the present disclosure. Further, as will be appreciated by those with skill in the art that each of the individual variations described and illustrated herein has discrete components and features which may be readily separated from or combined with the features of any of the other several embodiments without departing from the scope of the present disclosures. All such modifications are intended to be within the scope of claims associated with this disclosure.

The disclosure includes methods that may be performed using the subject devices. The methods may comprise the act of providing such a suitable device. Such provision may be performed by the end user. In other words, the "providing" act merely requires the end user obtain, access, approach, position, set-up, activate, power-up or otherwise act to provide the requisite device in the subject method. Methods recited herein may be carried out in any order of the recited events which is logically possible, as well as in the recited order of events.

Where a range of values is provided, it is understood that every intervening value, between the upper and lower limit of that range and any other stated or intervening value in that stated range, is encompassed within the disclosure.

Except where mutually exclusive, any of the features may be employed separately or in combination with any other features and the disclosure extends to and includes all combinations and sub-combinations of one or more features described herein.

The foregoing description of various aspects of the disclosure has been presented for purposes of illustration and description. It is not intended to be exhaustive or to limit the disclosure to the precise form disclosed, and obviously, many modifications and variations are possible. Such modifications and variations that may be apparent to a person of skill in the art are included within the scope of the disclosure as defined by the accompanying claims.

## Claims

1. A fluted drill comprising, in axial sequence, a body portion, and a cutting portion, the cutting portion comprising two or more cutting edges, each cutting edge extending from a distal end of the cutting portion, and along the cutting portion towards the body portion,
   wherein each cutting edge has a first rake angle at the distal end of the cutting portion, progressively increasing to a third rake angle at a proximal end of the cutting portion, and each cutting edge has a first uncut chip thickness at the distal end of the cutting portion, progressively decreasing to a third uncut chip thickness at the proximal end of the cutting portion.

2. The fluted drill as claimed in Claim 1, further comprising two or more flutes extending along at least a part of the body portion, wherein each of the two or more cutting edges corresponds to a respective one of the two or more flutes.

3. The fluted drill as claimed in Claim 1, wherein the cutting portion comprises two cutting edges.

4. The fluted drill as claimed in Claim 2 or Claim 3, wherein each of the two or more flutes is a straight flute.

5. The fluted drill as claimed in any one of Claims 2 to 4, wherein the two or more flutes are circumferentially spaced evenly around the body portion.

6. The fluted drill as claimed in any one of Claims 1 to 5, wherein the cutting portion comprises a straight cutting edge extending from the proximal end of the cutting portion.

7. The fluted drill as claimed in any one of Claims 1 to 6, wherein the body portion has a radius R, the cutting portion comprises a shoulder point between the distal end and the proximal end thereof, the shoulder point being positioned at a predetermined radius, each cutting edge has a second rake angle at the shoulder point, and each cutting edge has a second uncut chip thickness at the shoulder point.

8. The fluted drill as claimed in Claim 7, wherein the shoulder point is positioned at a radius of approximately 0.6*R.

9. The fluted drill as claimed in Claim 7 or Claim 8, wherein the first rake angle is -10°, the second rake angle is 10°, the third rake angle is 30°, the first uncut chip thickness is 4 $\mu$m, the second uncut chip thickness is 1 $\mu$m, and the third uncut chip thickness is 0.1 $\mu$m.

10. The fluted drill as claimed in any one of Claims 1 to 9, wherein the drill is formed from a material selected from the group consisting of monolithic polycrystalline diamond (PCD), and diamond coated HSS, carbide, ceramic, and cubic boron nitride.

11. The fluted drill as claimed in any one of Claims 1 to 10, wherein the cutting portion comprises brazed or replaceable disposable carbide inserts.

12. A method of manufacturing a fluted drill, the method comprising the steps of:

    (i) providing a drill blank;

(ii) forming at least two flutes along at least part of a radially outer surface of the drill blank, the at least two flutes extending from a distal end of the drill blank to at least part-way along the drill blank; and

(iii) forming a cutting portion at the distal end of the drill blank, the distal end of the drill blank corresponding to a distal end of the cutting portion, the cutting portion having two or more cutting edges, each cutting edge corresponding to a respective one of the flutes, each cutting edge extending from the distal end of the drill blank, and along the cutting portion, each cutting edge having a first rake angle at the distal end of the cutting portion, progressively increasing to a third rake angle at a proximal end of the cutting portion, and each cutting edge has a first uncut chip thickness at the distal end of the cutting portion, progressively decreasing to a third uncut chip thickness at the proximal end of the cutting portion.

13. The method as claimed in Claim 12, wherein step (iii) of forming a cutting edge at the distal end of the drill blank, comprises the steps of:

(iii') locating a shoulder point, the shoulder portion being positioned at a predetermined radius, where R is the radius of the drill blank; and

(iii") forming a cutting portion at the distal end of the drill blank, the cutting portion having two or more cutting edges, each cutting edge corresponding to a respective one of the flutes, each cutting edge extending from the distal end of the drill blank, and along the cutting portion, each cutting edge having a first rake angle at a distal end of the cutting portion, progressively increasing to a second rake angle at the shoulder point, and further progressively increasing to the third rake angle at a proximal end of the cutting portion, and each cutting edge has a first uncut chip thickness at the distal end of the cutting portion, progressively decreasing to a second uncut chip thickness at the shoulder point, and further progressively decreasing to a third uncut chip thickness at the proximal end of the cutting portion.

14. The method as claimed in Claim 13, wherein the shoulder point is positioned at a radius of approximately 0.6*R.

FIG. 1

(x-y plane)

FIG. 2B

(x-z plane)

FIG. 2A

FIG. 3

(x-y plane)

FIG. 4B

(x-z plane)

FIG. 4A

γ   - rake angle
$h_D$ - uncut chip thickness (depth of cut)
r    - radius of the tool

$γ_3, h_{D,3}$

3

Fibre
cutting/
Finishing

126:
226

$γ_2, h_{D,2}$

2

Material/
Matrix
removal

$γ_1, h_{D,1}$

1

$r_3$    $r_2$          $r_1$          124:224

FIG. 5

STEP 1:
Definition of rake angle and uncut chip thickness ranges for the three points shown in Fig. 5. (e.g $\gamma_1$ = [-30°,-5°], $\gamma_2$ = [-5°,5°], $\gamma_3$ = [5°,30°], $h_{d,1}$ = [15μm, 10μm], $h_{d,2}$ = [10μm, 5μm] and $h_{d,2}$ = [5μm, 1μm],

⇩

STEP 2:
n solutions (e.g 500) are randomly created containing values of rake angle and uncut chip thickness for the points 1,2 and 3: $\gamma_1, \gamma_2, \gamma_3, h_{d,1}, h_{d,2}$ and $h_{d,3}$ being limited by the values defined in step 10.
(e.g individual = [$\gamma_1$= -15°, $\gamma_2$= -0°, $\gamma_3$= 15°, $h_{d,1}$= 10μm, $h_{d,2}$= 1μm, $h_{d,3}$= 0.5μm])

⇩

STEP 3:
For each solution created in Step 20 discrete points are created along the cutting edge, forcing a smooth transition between the points 1, 2 and 3.
(e.g $\gamma$ = [-15, -10, -5, 0, 5, 10, 15] and $h_d$ = [14, 12, 10, 8, 6, 4, 2])

⇩

STEP 4:
For each point of the cutting edge, a system with Eq.1 (or Eq.3 if is a straight flute drill) and Eq.2 is solved, obtaining values of μ and φ (See Fig. 2).
(This process is completed for each solution created in Step 3)

⇩

STEP 5:
Each solution is evaluated with a weight function to discard non-physically possible (non-realistic) or non-optimal solutions

FIG. 6

(a)

(b)

FIG. 7

EP 3 395 485 A1

(a)

FIG. 8

(b)

Bank angle: -15 deg,0 deg,17 deg     Depth of cut: 5.07μm,0.53μm,0.03μm

FIG. 8 (Continued)

Europäisches
Patentamt

European
Patent Office

Office européen
des brevets

**EUROPEAN SEARCH REPORT**

Application Number

EP 18 16 8111

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 725 338 A (CABARET MAURICE JEAN [FR] ET AL) 10 March 1998 (1998-03-10) * column 1, lines 44-56 * * column 1, line 18 - column 2, line 5 * * figures 1-5 * ----- | 1-14 | INV. B23B51/00 B23B51/02 |
| X | US 2014/363249 A1 (OKA HISAO [JP] ET AL) 11 December 2014 (2014-12-11) * paragraphs [0050] - [0053]; figures 1,4,7,8 * ----- | 1-14 | |
| A | US 2010/158626 A1 (NAKAHATA TATSUO [JP] ET AL) 24 June 2010 (2010-06-24) * paragraphs [0018], [0019], [0073]; figures 1,2,9 * ----- | 1,4,6,9, 12,13 | |
| A | US 3 443 459 A (MACKEY BRUCE ALEXANDER ET AL) 13 May 1969 (1969-05-13) * page 6, lines 41-55; figures 2-20 * ----- | 1,12 | |
| A | JP 2010 284783 A (OSG CORP) 24 December 2010 (2010-12-24) * the whole document * ----- | 1,12 | TECHNICAL FIELDS SEARCHED (IPC) B23B |
| A | WO 2016/147963 A1 (MURATA KAZUHISA [JP] ET AL) 22 September 2016 (2016-09-22) * paragraph [0003]; figures 1-3 * ----- | 1,12 | |

The present search report has been drawn up for all claims

| Place of search | Date of completion of the search | Examiner |
|---|---|---|
| The Hague | 19 September 2018 | Rilliard, Arnaud |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 18 16 8111

This annex lists the patent family members relating to the patent documents cited in  the above-mentioned European search report.
The members are as contained in the European Patent Office EDP file on
The European Patent Office is in no way liable for these particulars which are merely given for the purpose of information.

19-09-2018

| Patent document cited in search report | | Publication date | Patent family member(s) | | Publication date |
|---|---|---|---|---|---|
| US 5725338 | A | 10-03-1998 | CA | 2137437 A1 | 09-06-1995 |
| | | | DE | 69400475 D1 | 10-10-1996 |
| | | | DE | 69400475 T2 | 20-02-1997 |
| | | | EP | 0657239 A1 | 14-06-1995 |
| | | | ES | 2091674 T3 | 01-11-1996 |
| | | | FR | 2713527 A1 | 16-06-1995 |
| | | | GR | 3021819 T3 | 28-02-1997 |
| | | | IL | 111834 A | 15-06-1998 |
| | | | JP | H07195216 A | 01-08-1995 |
| | | | US | 5725338 A | 10-03-1998 |
| US 2014363249 | A1 | 11-12-2014 | EP | 2799171 A1 | 05-11-2014 |
| | | | EP | 3056306 A1 | 17-08-2016 |
| | | | JP | 5945283 B2 | 05-07-2016 |
| | | | JP | WO2013099841 A1 | 07-05-2015 |
| | | | US | 2014363249 A1 | 11-12-2014 |
| | | | WO | 2013099841 A1 | 04-07-2013 |
| US 2010158626 | A1 | 24-06-2010 | US | 2010158626 A1 | 24-06-2010 |
| | | | US | 2016023281 A1 | 28-01-2016 |
| US 3443459 | A | 13-05-1969 | NONE | | |
| JP 2010284783 | A | 24-12-2010 | JP | 5258677 B2 | 07-08-2013 |
| | | | JP | 2010284783 A | 24-12-2010 |
| WO 2016147963 | A1 | 22-09-2016 | CN | 107427934 A | 01-12-2017 |
| | | | EP | 3272445 A1 | 24-01-2018 |
| | | | JP | 2016172305 A | 29-09-2016 |
| | | | KR | 20170127454 A | 21-11-2017 |
| | | | US | 2018056403 A1 | 01-03-2018 |
| | | | WO | 2016147963 A1 | 22-09-2016 |

EPO FORM P0459

For more details about this annex : see Official Journal of the European Patent Office, No. 12/82

**REFERENCES CITED IN THE DESCRIPTION**

**Non-patent literature cited in the description**

- Twist and straight-flute drills. **VIKTOR P. ASTAKHOV.** In Drills (Manufacturing Design and Technology. CRC Press